# EUROPEAN PATENT APPLICATION

(11) **EP 3 029 907 A1**
(43) Date of publication of application: **08.06.2016**
(21) Application number: 14840641.6
(22) Date of filing: 10.07.2014
(51) Int. Cl.: H04L 29/06

(54) **REMOTE CALLING METHOD AND APPARATUS**

(30) Priority: 29.08.2013 CN 201310386418
(71) Applicant: ZTE Corporation, Shenzhen, Guangdong 518057 (CN)
(72) Inventor: ZHOU, Qixin, Shenzhen Guangdong 518057 (CN)
(74) Representative: Savi, Massimiliano
(86) International application number: PCT/CN2014/081960
(87) International publication number: WO 2015/027762

(57) **Abstract**

Disclosed are a remote calling method and terminal, wherein the method includes: a service end registering released services to a register center; a client end sending a service subscription request to the register center; the register center receiving the service subscription request, and pushing a corresponding service to the client end in real time when finding that the corresponding service exists; after receiving the service pushed by the register center, the client end automatically adapting to a corresponding protocol, establishing a connection with the service end, and calling a corresponding service.

## Description

### Technical Field

The present invention relates to the field of remote communication calling, and more particularly, to a remote calling method and apparatus.

### Background of the Related Art

With the development of mobile Internet, the scale of Web applications continues to expand, and the service amount and types of services are increasingly complex and diverse. Meanwhile, it also makes the service remote data calling between the services increasingly frequent, for different practical scenarios, a service may select protocols such as RMI (Remote Method Invocation), web service, restful (a REST (Representational state transfer) style of web service) to release services and call services.

The existing cross-protocol remote calling apparatus often implements the communication between different protocols by modifying the configuration files and modifying source codes at the service end and the client end. The calling attributes between different machines and different protocols can be determined by modifying the configuration files; calling different protocols can be achieved by modifying the source codes at the service end and the client end.

In reality, when switching between different protocols to release services and call the services, it often needs not only to modify the configuration files, but also to modify the source codes at the business service end and the client end, making the development and release of business services very cumbersome.

### Summary of the Invention

The embodiment of the present invention provides a remote calling method and apparatus to switch freely between different protocols of the services.

To solve the abovementioned technical problem, the embodiment of the present invention provides a remote calling method, comprising:
a service end registering released services to a register center;
a client end sending a service subscription request to the register center;
the register center receiving the service subscription request, and when finding that a service corresponding to the service subscription request exists, pushing the corresponding service to the client end in real time;
after receiving the service pushed by the register center, the client end automatically adapting to a corresponding protocol, establishing a connection with the service end and calling a corresponding service.

Preferably, the abovementioned method further has the following feature: before the service end registering released services to the register center, it further comprises:
the service end configuring an interface for releasing services, interface implementation classes of services, service protocols and an address of the register center.

Preferably, the abovementioned method further has the following feature:
the service end is configured through an Extensible Markup Language file.

Preferably, the abovementioned method further has the following feature: before the client end sends a service subscription request to the register center, it further comprises:
the client end configuring an interface for calling services and an address of the register center.

Preferably, the abovementioned method further has the following feature: after the register center receives the service subscription request, it further comprises:
the register center associating services registered by the service end with services subscribed by the client end.

The embodiment of the present invention further provides a remote calling method, comprising:
a client end sending a service subscription request to a register center;
the client end receiving a service corresponding to the service subscription request and pushed by the register center;
the client end automatically adapting to a protocol corresponding to the service, establishing a connection with the service end, and calling a corresponding service.

Preferably, the abovementioned method further has the following feature: before the client end sends a service subscription request to the register center, it further comprises:
the client end configuring an interface for calling services and an address of the register center.

To solve the abovementioned problem, the embodiment of the present invention further provides a register center, comprising:
a registering module, configured to register services released by a service end;
a pushing module, configured to receive a service subscription request from a client end, and when finding that a corresponding service exists, push the corresponding service to the client end in real time.

Preferably, the register center further has the following feature: the register center further comprises:
an associating module, configured to associate services registered by the service end with services subscribed by the client end.

To solve the abovementioned problem, the embodiment of the present invention further provides a terminal as a service end, wherein, it comprises:
a configuring module, configured to configure and release services;
a registering module, configured to register the released services to a register center.

Preferably, the terminal further has the following feature:
the configuring module is configured to configure an interface for releasing services, interface implementation classes of services, service protocols and an address of the register center.

Preferably, the terminal further has the following feature:
the configuring module is configured through an Extensible Markup Language file.

To solve the abovementioned problem, the embodiment of the present invention further provides a terminal as a client end, comprising:
a sending-receiving module, configured to send a service subscription request to a register center, and receive a service pushed by the register center;
a processing module, configured to automatically adapt to a corresponding protocol, establishing a connection with a service end, and calling a corresponding service.

Preferably, the abovementioned terminal further has the following feature: the terminal further comprises:
a configuring module, configured to configure an interface for calling services and an address of the register center.

The embodiment of the present invention further provides a computer program, comprising program instructions, which, when being executed by a terminal, make the terminal execute the abovementioned method.

The embodiment of the present invention further provides a carrier carrying the abovementioned computer program.

In summary, the embodiment of the present invention provides a remote calling method and terminal to freely switch between different protocols of services without modifying any source codes of services, so as to achieve the service effect that the service development personnel can call other services in a very simple way, just like calling the local services, without focusing on service communication issues between multiple services, thus saving the service development time and improving the efficiency of service development, etc.

### Brief Description of the Drawings

FIG. 1 is a schematic diagram of a remote calling system in accordance with an embodiment of the present invention;
FIG. 2 is a schematic diagram of a terminal as a register center in accordance with an embodiment of the present invention;
FIG. 3 is a schematic diagram of a terminal as a service end in accordance with an embodiment of the present invention;
FIG. 4 is a schematic diagram of a terminal as a client end in accordance with an embodiment of the present invention;
FIG. 5 is a flow chart of a remote calling method in accordance with an embodiment of the present invention.

### Preferred Embodiments of the Invention

Hereinafter, in conjunction with the accompanying drawings, the embodiments of the present invention will be described in detail. It should be noted that, in the case of no conflict, embodiments and features in the embodiments of the present application may be combined arbitrarily with each other.

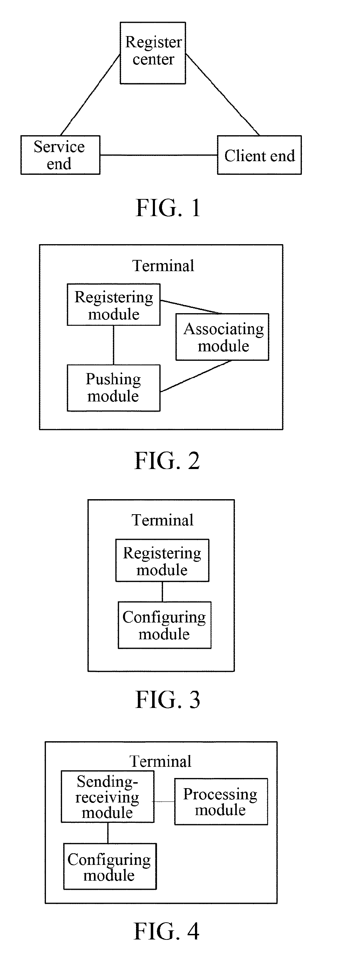

FIG. 1 is a schematic diagram of a remote calling system in accordance with an embodiment of the present invention, as shown in FIG. 1, the system according to the present embodiment may comprise:
a service end, configured to register released services to a register center;
a client end, configured to send a service subscription request to the register center; automatically adapt to a corresponding protocol after receiving a service pushed by the register center, establish a connection with the service end, and call a corresponding service;
the register center is configured to receive the service subscription request, and when finding that a service corresponding to the service subscription request exists, push the corresponding service to the client end in real time.

FIG. 2 is a schematic diagram of a terminal as a register center in accordance with an embodiment of the present invention, as shown in FIG. 2, the register center of the present embodiment comprises:
a registering module, configured to register services released by the service end;
a pushing module, configured to receive a service subscription request from the client end, and when finding that a corresponding service exists, push the corresponding service to the client end in real time.

In a preferred embodiment, the register center further comprises:
an associating module, configured to associate services registered by the service end with services subscribed by the client end.

FIG. 3 is a schematic diagram of a terminal as a service end in accordance with an embodiment of the present invention, as shown in FIG. 3, the service end of the present embodiment comprises:
a configuring module, configured to configure and release services;
a registering module, configured to register the released services to a register center.

Preferably, the configuring module configures an interface for releasing services, interface implementation classes of services, service protocols and an address of the register center.

Preferably, the configuring module is configured through the Extensible Markup Language file.

FIG. 4 is a schematic diagram of a terminal as a client end in accordance with an embodiment of the present invention, as shown in FIG. 4, the client end of the present embodiment comprises:
a sending-receiving module, configured to send a service subscription request to a register center, and receive a service pushed by the register center;
a processing module, configured to automatically adapt to a corresponding protocol, establish a connection with the service end, and call a corresponding service.

In a preferred embodiment, the client end further comprises:
a configuring module, configured to configure an interface for calling services and an address of the register center.
a register center: configured to process a service registration of the service end, a service subscription of the client end, detect each service dependency, detect heartbeat, and so on, meanwhile, push the service automatically to the client end according to the situation of client end's service subscription.

An agent module is respectively installed in the service end and the client end to parse the configuration files through the reflection principle, automatically select different protocols, select a high-performance serialization, and send and receive data.

The Register center and the Agent can be deployed respectively in different machines, a total of three machines.

The functions of the service end comprise: the configuration layer of the service end configures different protocols, service implementations, serialization ways and the address of the connected register center through the xml (Extensible Markup Language) file; the protocol adaptation layer of the service end selects to adapt to different protocols to implement based on the configuration conditions; the protocol layer of the service end implements the initiation corresponding to different protocols for the different protocols; the transmission layer of the service end transmits by means of the BIO (blocking input/output, synchronous blocking input current/output streams) or NIO (new input/output, synchronous non-blocking input/output streams); the serialization layer of the service end uses different ways to serialize the objects.

The functions of the register center comprise: associating the release and subscription of a specific service; performing a heartbeat detection management between the register center and the service end and the client end; detecting the compatibility of the services registered by the service end and and the services subscribed by the client end.

The functions of the client end comprise: the configuration layer of the client end configures an interface for calling services, serialization ways and the address of the connected register center through the xml file; the protocol adaptation layer of the client end parses the service end URL (Uniform Resource Locator) based on the pushed service end URL, and further automatically adapts to the corresponding protocol; the protocol layer of the client end implements different protocol calls corresponding to the different protocols; the transmission layer of the client end transmits by means of BIO or NIO; the serialization layer of the service end uses different ways to serialize the objects before the transmission.

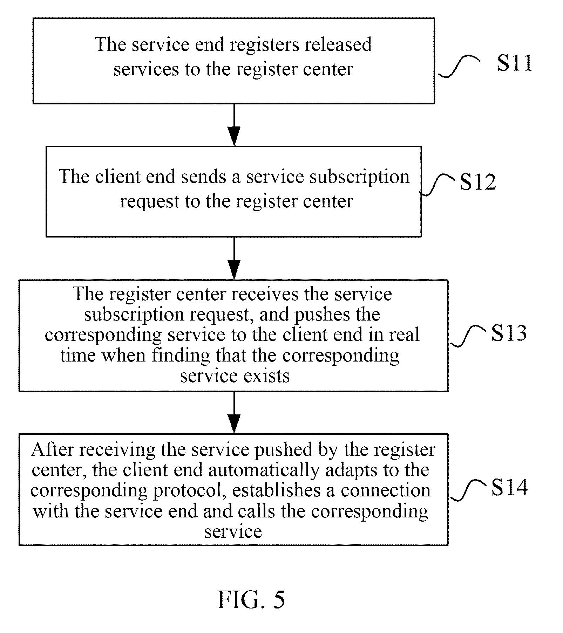

FIG. 5 is a flow chart of a remote calling method in accordance with an embodiment of the present invention, first, it is to install the register center, and both the business service end and the client end are loaded with the Agent module and the configuration file, as shown in FIG. 5, the method of the present embodiment comprises:
S11, the service end registers released services to the register center;
S12, the client end sends a service subscription request to the register center;
S13, the register center receives the service subscription request, and pushes the corresponding service to the client end in real time when finding that the service corresponding to the service subscription request exists;
S14, after receiving the service pushed by the register center, the client end automatically adapts to the corresponding protocol, establishes a connection with the service end and calls the corresponding service.

Thus, when switching a service or adding a new service, it only needs to modify the service protocol name in the configuration entry of the service end.

The embodiment of the present invention further provides a computer program, comprising program instructions, which, when being executed by a terminal, make the terminal execute the abovementioned method.

The embodiment of the present invention further provides a carrier carrying the abovementioned computer program.

The method and system according to the embodiment of the present invention can be used to freely switch between different protocols of services without modifying any source codes of services, achieving the service effect that the service development personnel can call other services in a very simple way, just like calling the local services, without focusing on service communication issues between multiple services,, thus saving the service development time and improving the efficiency of service development, etc.

The processing steps of the flow part of the first application example of the present invention are as follows:
in step 1, it is to initiate the register center, and the register center initiates the Socket monitoring.
in step 2, it is to operate at the service end, configure the interface for releasing services and the interface implementation class of services, configure protocols for releasing the services, serialization ways and the address of the register center through the xml configuration file.
In step 3, it is to initiate the service end, and the service end registers the services to the register center.
In step 4, it is to operate at the client end, configure the interface for calling services, the serialization way and the address of the register center through the xml configuration file.
In step 5: it is to initiate the client end, and the client end subscribes a service from the register center, when the service exists, the register center pushes the service to the client end in real time.
In step 6: the client end automatically discovers the existing service, and then establishes a connection with the service end, and calls the service.

Therefore, when changing the protocol, it only needs to modify the released service protocol name in the xml configuration at the service end, while the register center and the client end do not need any changes.

In reality, when switching between different protocols to release and call services, it often needs not only to modify the configuration file, but also to modify source codes of the business service end and the client end. In the embodiment of the present invention, assuming that it needs to switch to a different protocol, it only needs to modify the configuration files, while the service codes need no changes. At the same time, the embodiment of the present invention also introduces the automatic discovery service function and the high-performance serialization, such as relatively short serialization/deserialization time and relatively high transmission data compression ratio.

The method according to the embodiment of the present invention achieves dynamic switching between services of different protocols by combining the plug-ins deployment and the file configuration. It only needs to modify the configuration file of the service end in order to dynamically switch the service calling between different protocols, while the source codes of the business service end and the client end do not need any changes. With this tool, the service development personnel do not need to focus on service communication issues between multiple services and can call services offered by other business in a very simple way, like calling local services, so as to achieve the service calling of different nodes in the Internet, and make the development and release of business services very simple and convenient.

Those ordinarily skilled in the art can understand that all or some of steps of the abovementioned method may be completed by the programs instructing the relevant hardware, and the programs may be stored in a computer-readable storage medium, such as read only memory, magnetic or optical disk. Alternatively, all or some of the steps of the abovementioned embodiments may also be implemented by using one or more integrated circuits. Accordingly, each module/unit in the abovementioned embodiments may be realized in a form of hardware, or in a form of software function modules. The present invention is not limited to any specific form of hardware and software combinations.

The above description is only preferred embodiments of the present invention, and of course, the present invention can have other various embodiments, without departing from the spirit and essence of the present invention, those skilled in the art can make corresponding changes and modifications in accordance with the present invention, and these corresponding changes and modifications should be within the protection scope of the appended claims of the present invention.

### Industrial Applicability

The embodiment of the present invention achieves the service effect that the service development personnel can call other services in a very simple way, just like calling the local services, without focusing on service communication issues between multiple services,, thus saving the service development time and improving the efficiency of service development, etc.

## Claims

1. A remote calling method, comprising:
a service end registering released services to a register center;
a client end sending a service subscription request to the register center;
the register center receiving the service subscription request, and when finding that a service corresponding to the service subscription request exists, pushing the corresponding service to the client end in real time;
after receiving the service pushed by the register center, the client end automatically adapting to a corresponding protocol, establishing a connection with the service end and calling a corresponding service.

2. The method of claim 1, wherein, before the service end registering released services to the register center, the method further comprises:
the service end configuring an interface for releasing services, interface implementation classes of services, service protocols and an address of the register center.

3. The method of claim 2, wherein:
the service end is configured through an Extensible Markup Language file.

4. The method of claim 1, wherein: before the client end sends a service subscription request to the register center, the method further comprises:
the client end configuring an interface for calling services and an address of the register center.

5. The method of any one of claims 1 to 4, wherein, after the register center receives the service subscription request, the method further comprises:
the register center associating services registered by the service end with services subscribed by the client end.

6. A remote calling method, comprising:
a client end sending a service subscription request to a register center;
the client end receiving a service corresponding to the service subscription request and pushed by the register center;
the client end automatically adapting to a protocol corresponding to the service, establishing a connection with the service end, and calling a corresponding service.

7. The method of claim 6, wherein, before the client end sends a service subscription request to the register center, the method further comprises:
the client end configuring an interface for calling services and an address of the register center.

8. A terminal, working as a register center, comprising:
a registering module, configured to register services released by a service end; and
a pushing module, configured to receive a service subscription request from a client end, and when finding that a corresponding service exists, push the corresponding service to the client end in real time.

9. The terminal of claim 8, wherein, the terminal further comprises:
an associating module, configured to associate services registered by the service end with services subscribed by the client end.

10. A terminal, working as a service end, comprising:
a configuring module, configured to configure and release services; and
a registering module, configured to register the released services to a register center.

11. The terminal of claim 10, wherein:
the configuring module is configured to: configure an interface for releasing services, interface implementation classes of services, service protocols and an address of the register center.

12. The terminal of claim 10 or 11, wherein:
the configuring module is configured through an Extensible Markup Language file.

13. A terminal, working as a client end, comprising:
a sending-receiving module, configured to send a service subscription request to a register center, and receive a service pushed by the register center;
a processing module, configured to automatically adapt to a corresponding protocol, establishing a connection with a service end, and calling a corresponding service.

14. The terminal of claim 13, wherein, the terminal further comprises:
a configuring module, configured to configure an interface for calling services and an address of the register center.

15. A computer program, comprising program instructions, which, when being executed by a terminal, make the terminal execute the method of any one of claims 1-7.

16. A carrier carrying the computer program of claim 15.
